# EUROPÄISCHE PATENTANMELDUNG

(11) **EP 1 898 301 A2**
(43) Veröffentlichungstag der Anmeldung: **12.03.2008**
(21) Anmeldenummer: 07115193.0
(22) Anmeldetag: 29.08.2007
(51) Int. Cl.: G06F 3/06

(54) **Datenbanksystem, Verfahren zum Betreiben des Datenbanksystems und Computerprogrammprodukt**

(30) Priorität: 01.09.2006 DE 102006041311
(71) Anmelder: Siemens VDO Automotive AG, 93055 Regensburg (DE)
(72) Erfinder: Kirsch, Stefan, 93049, Regensburg (DE); Pfeifle, Martin, 93142, Maxhütte-Haidhof (DE); Sasse, Volker, 93138, Lappersdorf (DE); Tantz, Uwe, 93152, Nittendorf (DE)

(57) **Zusammenfassung**

Ein Datenbanksystem (2) umfasst ein Speichermedium (4). Das Speichermedium (4) weist zumindest einen logisch zusammenhängenden Speicherbereich (6) auf. Mehrere komprimierte Datenseiten (8) sind in dem logisch zusammenhängenden Speicherbereich (6) abgespeichert. Innerhalb des logisch zusammenhängenden Speicherbereichs (6) existiert zumindest ein freier Speicherblock (10) zum Abspeichern zumindest einer komprimierten neuen Datenseite (22). Ein Adressblock (12) ist außerhalb des logisch zusammenhängenden Speicherbereichs (6) abgespeichert und umfasst Speicheradressen (16), die jeweils einen Beginn einer der komprimierten Datenseiten (8) kennzeichnen. Ein Freispeicher-Adressblock (14) ist außerhalb des logisch zusammenhängenden Speicherbereichs (6) abgespeichert und umfasst zumindest eine Freispeicheradresse (18), die einen Beginn des freien Speicherblockes (10) kennzeichnet.

## Beschreibung

Die Erfindung betrifft ein Datenbanksystem und ein Verfahren zum Betreiben des Datenbanksystems. Das Datenbanksystem hat ein Speichermedium, das zumindest einen logisch zusammenhängenden Speicherbereich aufweist. Ferner betrifft die Erfindung ein Computerprogrammprodukt, das eine computerlesbare Speichereinheit mit Programmanweisungen umfasst.

Moderne Datenbanksysteme umfassen regelmäßig ein Datenbankverwaltungssystem und eine Datenbank. Das Datenbankverwaltungssystem übersetzt beispielsweise Programmanweisungen in computerausführbare Maschinensprache, organisiert die Daten der Datenbank und umfasst je nach Ausführungsform des Datenbankverwaltungssystem eine, in der Regel viele weitere Funktionen zum Verwalten der Daten der Datenbank. Die Datenbank umfasst im Wesentlichen ein Speichermedium. Das Speichermedium umfasst vorzugsweise eine Festplatte eines Computers. Das Speichermedium kann jedoch auch einen mobilen Datenträger umfassen. Das Datenbanksystem eignet sich zum Verwalten großer Datenmengen. Dazu benötigen moderne Datenbanksysteme regelmäßig weit mehr Speicherplatz, als für das reine Abspeichern der Daten nötig wäre. Somit können die großen Datenmengen zwar verwaltet werden, benötigen jedoch in der Regel unverhältnismäßig viel Speicherplatz.

Ein Komprimieren der gesamten Datenbank oder das Verwenden eines Speichermediums mit einem Datensystem, das pauschal alle Daten komprimiert abspeichert, führt zu langen Zugriffszeiten auf die Daten.

Dies ist vor allem bei tragbaren Geräten und/oder integrierten Systemen problematisch, bei denen regelmäßig lediglich stark begrenzter Speicherplatz und/oder stark begrenzte Prozessorleistung zur Verfügung steht. Das integrierte System kann beispielsweise ein Navigationssystem oder ein Bordcomputer eines Kraftfahrzeugs sein. Das tragbare Gerät kann beispielsweise ein Laptop und/oder ein Taschencomputer sein.

Es ist Aufgabe der Erfindung, ein Datenbanksystem und ein Verfahren zum Betreiben des Datenbanksystems zu schaffen, die ein einfaches und schnelles Verwalten großer Datenmengen ermöglicht.

Die Aufgabe wird gelöst durch die Merkmale der unabhängigen Ansprüche. Vorteilhafte Ausgestaltungen der Erfindung sind in den Unteransprüchen angegeben.

Die Erfindung zeichnet sich aus gemäß eines ersten Aspekts der Erfindung durch ein Datenbanksystem. Das Datenbanksystem umfasst ein Speichermedium, das zumindest einen logisch zusammenhängenden Speicherbereich aufweist. In dem logisch zusammenhängenden Speicherbereich sind mehrere komprimierte Datenseiten abgespeichert. Innerhalb des logisch zusammenhängenden Speicherbereichs ist zum Abspeichern zumindest einer komprimierten neuen Datenseite zumindest ein freier Speicherblock vorgesehen. Ferner umfasst das Datenbanksystem einen Adressblock und einen Freisprecheradressblock. Der Adressblock ist außerhalb des logisch zusammenhängenden Speicherbereichs abgespeichert und umfasst Speicheradressen, die jeweils einen Beginn einer der komprimierten Datenseiten kennzeichnen. Der Freispeicher-Adressblock ist außerhalb des logisch zusammenhängenden Speicherbereichs abgespeichert und umfasst zumindest eine Freispeicheradresse, die einen Beginn des freien Speicherblocks kennzeichnet.

Das Einbinden der komprimierten Datenseiten in das Datenbanksystem ermöglicht, eine besonders große Datenmenge mit dem Datenbanksystem zu verwalten. Die Trennung der komprimierten Datenseiten von dem Adressblock und der freie Speicherblock ermöglichen einen sehr schnellen und komfortablen Zugriff auf die Daten der Datenseiten. Dies trägt zu einem einfachen und schnellen Verwalten großer Datenmengen mit dem Datenbanksystem bei.

Vorzugsweise umfasst das Datenbanksystem ein Datenbankverwaltungssystem und eine Datenbank. Die Datenbank umfasst das Speichermedium. Das Datenbankverwaltungssystem eignet sich zum Verwalten von Daten, die auf der Datenbank, insbesondere auf dem Speichermedium der Datenbank abgespeichert sind.

In einer vorteilhaften Ausgestaltung des ersten Aspekts der Erfindung umfasst das Datenbanksystem einen Pager. Der Pager ist dazu ausgebildet, eine Datenseite des Datenbanksystems zu komprimieren. Dies ermöglicht, die Datenseiten zu komprimieren, ohne dass ein Benutzer des Datenbanksystems davon Kenntnis erlangt. Ferner erübrigt sich dadurch ein externes Programm zum komprimieren der Daten. Dies trägt zu einem sehr komfortablen Verwalten der großen Datenmengen bei. Das Einbinden einer entsprechenden Kompressionsfunktion in einen Pager ohne Kompressionsfunktion ist relativ einfach möglich, ohne einen Kern des Datenbanksystems ändern zu müssen. Dies trägt zu einer sehr günstigen Umsetzung des Datenbanksystems bei.

Die Erfindung zeichnet sich aus gemäß eines zweiten Aspekts der Erfindung durch ein Verfahren zum Betreiben des Datenbanksystems. Zum Speichern einer neuen Datenseite wird die neue Datenseite von dem Datenbanksystem komprimiert. Es wird überprüft, ob die komprimierte neue Datenseite in den freien Speicherblock des logisch zusammenhängenden Speicherbereichs des Speichermediums passt. Falls die komprimierte neue Datenseite in den freien Speicherblock des logisch zusammenhängenden Speicherbereichs des Speichermediums passt, wird die komprimierte neue Datenseite in dem freien Speicherblock der Datenbank abgespeichert. Die entsprechende Freispeicheradresse des freien Speicherblocks wird aus dem Freispeicher-Adressblock gelöscht. Die entsprechende Speicheradresse der gespeicherten komprimierten neuen Datenseite wird in dem Adressblock abgespeichert. Dies ermöglicht, dass bestehende komprimierte Datenseiten nicht verändert werden müssen, um die neue komprimierte Datenseite einzufügen. Ferner ermöglicht das obligatorische Komprimieren der Datenseiten innerhalb des Datenbanksystems einen besonders komfortablen Zugriff auf die besonders großen Datenmengen, beispielsweise weil ein Anwender des Datenbanksystems sich nicht mit der Komprimierung der Daten auseinandersetzen muss.

In einer vorteilhaften Ausgestaltung des zweiten Aspekts der Erfindung wird die komprimierte neue Datenseite an die letzte komprimierte Datenseite des logisch zusammenhängenden Speicherbereichs angehängt, falls die komprimierte neue Datenseite nicht in den freien Speicherblock passt. In dem Adressblock wird die entsprechende Speicheradresse der abgespeicherten komprimierten neuen Datenseite abgespeichert. Dies ermöglicht einfach, die komprimierte neue Datenseite abzuspeichern, falls die komprimierte neue Datenseite nicht in den freien Speicherblock passt.

In einer weiteren vorteilhaften Ausgestaltung des zweiten Aspekts der Erfindung werden, falls die komprimierte neue Datenseite nicht in den freien Speicherblock passt, die bereits abgespeicherten komprimierten Datenseiten des logisch zusammenhängenden Speicherbereichs neu angeordnet. Die komprimierte neue Datenseite wird zwischen die bereits abgespeicherten komprimierten Datenseiten des logisch zusammenhängenden Speicherbereichs eingegliedert. Die entsprechenden neuen Speicheradressen der neu angeordneten komprimierten Datenseiten und der komprimierten neuen Datenseite werden in dem Adressblock abgespeichert. Dies ermöglicht einfach, die komprimierte neue Datenseite abzuspeichern, falls die komprimierte neue Datenseite nicht in den freien Speicherblock passt.

In einer weiteren vorteilhaften Ausgestaltung des zweiten Aspekts der Erfindung wird die komprimierte neue Datenseite in dem freien Speicherblock gespeichert. Es wird überprüft, ob der vor dem Speichern der komprimierten neuen Datenseite freie Speicherblock nach dem Speichern der komprimierten neuen Datenseite noch weiteren freien Speicherplatz aufweist. Falls nach dem Speichern der komprimierten neuen Datenseite der vor dem Speichern der komprimierten neuen Datenseite freie Speicherblock noch weiteren freien Speicherplatz aufweist, wird ein Beginn des weiteren freien Speicherplatzes einem Beginn eines neuen freien Speicherblocks zugeordnet. Eine neue Freispeicheradresse, die den Beginn des neuen freien Speicherblocks kennzeichnet, wird in dem Freispeicher-Adressblock abgespeichert. Dies trägt dazu bei, dass das Datenbanksystem mehrere freie Speicherblöcke umfasst und somit genügend unterschiedliche freie Speicherblöcke vorhanden sind, um komprimierte neue oder komprimierte geänderte Datenseiten abspeichern zu können. Ferner geht dadurch kein freier Speicherplatz verloren.

In einer weiteren vorteilhaften Ausgestaltung des zweiten Aspekts der Erfindung wird zum Ändern einer der Datenseiten der Datenbank die Speicheradresse der entsprechenden komprimierten Datenseite aus dem Adressblock gelesen. Die entsprechende komprimierte Datenseite wird von dem Datenbanksystem dekomprimiert. Die entsprechende Datenseite wird geändert. Die geänderte Datenseite wird komprimiert. Es wird überprüft, wie viel Speicherplatz die komprimierte geänderte Datenseite benötigt. Die komprimierte geänderte Datenseite wird beginnend mit derselben Speicheradresse wie die entsprechende komprimierte Datenseite vor der Änderung abgespeichert, falls die komprimierte geänderte Datenseite gleich viel wie oder weniger Speicherplatz als die entsprechende komprimierte Datenseite vor der Änderung benötigt. Falls die komprimierte geänderte Datenseite mehr Speicherplatz benötigt als die entsprechende komprimierte Datenseite vor der Änderung und falls die komprimierte geänderte Datenseite gleich viel oder weniger Speicherplatz benötigt als der freie Speicherblock umfasst, wird die komprimierte geänderte Datenseite in dem freien Speicherblock gespeichert. Die entsprechende Freispeicheradresse des vor dem Speichern der komprimierten geänderten Datenseite freien Speicherblocks wird aus dem Freispeicher-Adressblock gelöscht. Die entsprechende Freispeicheradresse wird als Speicheradresse in dem Adressblock gespeichert. Dies trägt besonders einfach und wirkungsvoll zu dem komfortablen und schnellen Verwalten der großen Datenmengen bei.

In einer weiteren vorteilhaften Ausgestaltung des zweiten Aspekts der Erfindung wird eine neue Freispeicheradresse in dem Freispeicher-Adressblock abgespeichert, falls die komprimierte geänderte Datenseite weniger Speicherplatz als die entsprechende komprimierte Datenseite vor der Änderung benötigt. Die neue Freispeicheradresse kennzeichnet einen Beginn des neuen freien Speicherblocks, der an die komprimierte geänderte Datenseite anschließt. Dies trägt dazu bei, dass das Datenbanksystem mehrere freie Speicherblöcke umfasst und somit genügend unterschiedliche freie Speicherblöcke vorhanden sind, um neue oder geänderte Datenseiten abspeichern zu können. Ferner geht dadurch kein freier Speicherplatz verloren.

In einer weiteren vorteilhaften Ausgestaltung des zweiten Aspekts der Erfindung wird die komprimierte geänderte Datenseite an die letzte komprimierte Datenseite des logisch zusammenhängenden Speicherbereichs angehängt, falls die komprimierte geänderte Datenseite mehr Speicherplatz als die entsprechende komprimierte Datenseite vor der Änderung benötigt und falls die komprimierte geänderte Datenseite mehr Speicherplatz benötigt, als der freie Speicherblock umfasst. Eine neue Speicheradresse wird in dem Adressblock gespeichert, die einen Beginn der komprimierten geänderten Datenseite kennzeichnet. Die Speicheradresse, die den Beginn der entsprechenden komprimierten Datenseite vor der Änderung kennzeichnet, wird als neue Freispeicheradresse in dem Freispeicher-Adressblock gespeichert. Dies ermöglicht, Datenseiten abzuspeichern, die mehr Speicherplatz benötigen als der freie Speicherblock umfasst und gleichzeitig einen neuen freien Speicherblock, insbesondere freien Speicherplatz zu schaffen.

In einer weiteren vorteilhaften Ausgestaltung des zweiten Aspekts der Erfindung werden die bereits abgespeicherten komprimierten Datenseiten des logisch zusammenhängenden Speicherbereichs neu angeordnet, falls die komprimierte geänderte Datenseite mehr Speicherplatz als die entsprechende komprimierte Datenseite vor der Änderung benötigt und falls die komprimierte geänderte Datenseite mehr Speicherplatz benötigt, als der freie Speicherblock umfasst. Die komprimierte neue Datenseite wird in die bereits abgespeicherten komprimierten Datenseiten des logisch zusammenhängenden Speicherbereichs eingegliedert und abgespeichert. Die entsprechenden neuen Speicheradressen der neu angeordneten komprimierten Datenseiten und der komprimierten neuen Datenseite werden in dem Adressblock abgespeichert. Dies ermöglicht, Datenseiten abzuspeichern, die mehr Speicherplatz benötigen als der freie Speicherblock umfasst.

In einer weiteren vorteilhaften Ausgestaltung des zweiten Aspekts der Erfindung wird in dem freien Speicheradressblock die Freispeicheradresse abgespeichert, die den Beginn des neuen freien Speicherblocks kennzeichnet, der an die geänderte komprimierte Datenseite anschließt, falls die geänderte komprimierte Datenseite mehr Speicherplatz benötigt als die entsprechende komprimierte Datenseite vor der Änderung und falls die geänderte komprimierte Datenseite weniger Speicherplatz benötigt als der freie Speicherblock umfasst. Dies trägt dazu bei, dass das Datenbanksystem mehrere freie Speicherblöcke umfasst und somit genügend unterschiedliche freie Speicherblöcke vorhanden sind, um vorzugsweise komprimierte neue oder geänderte Datenseiten abspeichern zu können. Ferner geht dadurch kein freier Speicherplatz verloren.

Die Erfindung zeichnet sich aus gemäß eines dritten Aspekts der Erfindung durch ein Computerprogrammprodukt. Das Computerprogrammprodukt umfasst eine computerlesbare Speichereinheit mit Programmanweisungen. Die Programmanweisungen sind durch einen Computer ausführbar und ausgebildet zum Durchführen des Verfahrens zum Betreiben des Datenbanksystems.

Die Erfindung ist im Folgenden anhand von schematischen Zeichnungen näher erläutert.

Es zeigen:
- Figur 1: ein Datenbanksystem,
- Figur 2: einen logisch zusammenhängenden Speicherbereich des Datenbanksystems,
- Figur 3: ein Ablaufdiagramm eines ersten Programms zum Betreiben des Datenbanksystems,
- Figur 4: ein Ablaufdiagramm eines zweiten Programms zum Betreiben des Datenbanksystems.

Elemente gleicher Konstruktion oder Funktion sind figurenübergreifend mit den gleichen Bezugszeichen gekennzeichnet.

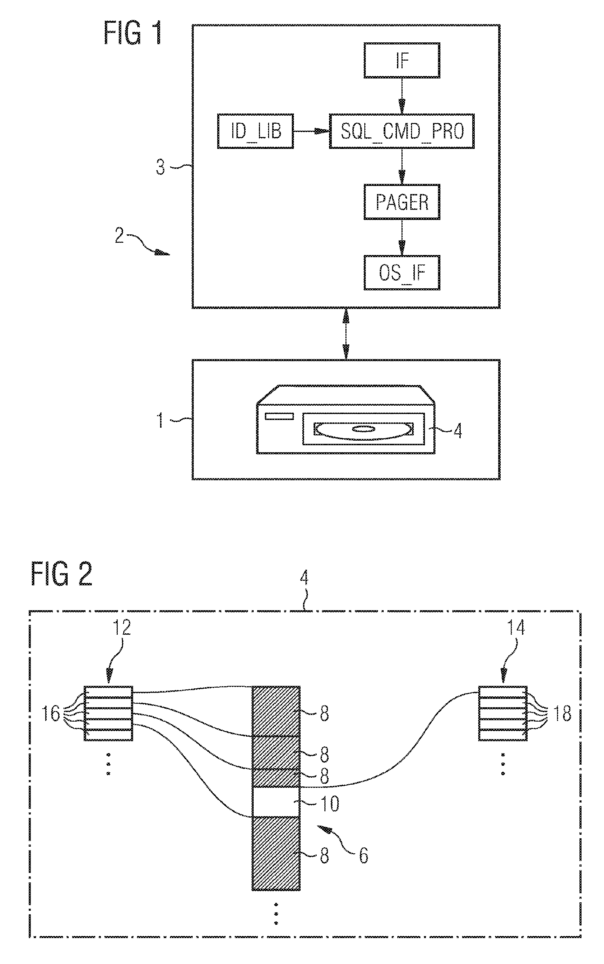

Ein Datenbanksystem 2 (Figur 1) umfasst eine Datenbank 1 und ein Datenbankverwaltungssystem 3. Die Datenbank 1 umfasst zumindest ein Speichermedium 4. Das Speichermedium 4 umfasst vorzugsweise eine Festplattenspeichereinheit. Alternativ oder zusätzlich kann das Speichermedium 4 einen mobilen Datenträger umfassen. Das Datenbanksystem 2 und/oder insbesondere die Datenbank 1 können ein relationales Datenbanksystem 2 bzw. eine relationale Datenbank 1 und/oder ein proprietäres Datenbanksystem 2 bzw. eine proprietäre Datenbank 1 umfassen.

Das Datenbankverwaltungssystem ist ausgebildet zum Verwalten von Daten, die auf der Datenbank 1, insbesondere auf dem Speichermedium 4 abgespeichert sind. Das Datenbankverwaltungssystem 3 umfasst eine Schnittstelle IF, einen SQL-Befehls-Prozessor SQL_CMD_PRO, einen Pager PAGER, ein Verzeichnis ID_LIB von Indexstrukturen und eine Betriebssystemschnittstelle OS_IF. Das Datenbankverwaltungssystem 3 kommuniziert mit der Datenbank 1. Alternativ zu dem SQL-Befehls-Prozessor SQL_CMD_PRO kann ein alternatives Programmmodul verwendet werden. Beispielsweise kann das alternative Programmmodul abhängig von der verwendeten Programmiersprache ausgewählt werden. Ferner kann, falls das Datenbanksystem 2 das proprietäre Datenbanksystem 2 bzw. die proprietäre Datenbank 1 umfasst, alternativ zu dem SQL-Befehls-Prozessor SQL_CMD_PRO ein proprietäres Programmmodul vorgesehen sein.

Die Schnittstelle IF umfasst vorzugsweise Eingabe- und Ausgabeeinheiten, durch die Befehlszeilen in das Datenbankverwaltungssystem 3 eingegeben werden können. Die Befehlszeilen werden vorzugsweise in einer Programmiersprache SQL geschrieben. Die Schnittstelle IF leitet die geschriebenen Befehlszeilen an den SQL-Befehls-Prozessor SQL_CMD_PRO weiter.

Der SQL-Befehls-Prozessor SQL_CMD_PRO ermittelt abhängig von den Befehlszeilen und vorzugsweise abhängig von mindestens einer verfügbaren Indexstruktur, die in dem Verzeichnis ID_LIB der Indexstrukturen hinterlegt ist, einen Software-Ausführungsplan. Der Software-Ausführungsplan ist ein Programmabschnitt, der dazu dient, den Zugriff auf die Daten möglichst effizient zu gestalten.

Der Software-Ausführungsplan wird von dem SQL-Befehls-Prozessor SQL_CMD_PRO an den Pager PAGER übergeben. Der Pager PAGER dient dazu, abhängig von dem Software-Ausführungsplan einen Hardware-Ausführungsplan zu ermitteln. Der Hardware-Ausführungsplan ist repräsentativ dafür, wie eine Hardware, beispielsweise die Festplatte und/oder der mobile Datenträger, die die Datenbank 1 umfassen können, angesteuert werden müssen, um den Software-Ausführungsplan abzuarbeiten.

Der Hardware-Ausführungsplan wird an die Betriebssystem-Schnittstelle OS_IF übergeben, welche den Hardware-Ausführungsplan in entsprechende Stellsignale für das technische Gerät übersetzt, das das Speichermedium 4 umfasst, auf dem die Daten gespeichert sind.

Das Speichermedium 4 umfasst zumindest einen logisch zusammenhängenden Speicherbereich 6 (Figur 2). In dem logisch zusammenhängenden Speicherbereich 6 ist zumindest eine, bevorzugt mehrere komprimierte Datenseiten 8 gespeichert. Ferner umfasst der logisch zusammenhängende Speicherbereich 6 zumindest einen freien Speicherblock 10. Der freie Speicherblock 10 ist durch freien Speicherplatz gekennzeichnet. Frei heißt in diesem Zusammenhang, dass der freie Speicherplatz mit Daten beschrieben werden kann, ohne dass dazu Daten gelöscht werden müssen.

Vorzugsweise außerhalb des logisch zusammenhängenden Speicherbereichs 6 sind ein Adressblock 12 und ein Freispeicher-Adressblock 14 abgespeichert. Der Adressblock 12 und/oder der Freispeicher-Adressblock 14 können auf dem Speichermedium 4 oder außerhalb des Speichermediums 4 abgespeichert sein. Falls der Adressblock 12 und/oder der Freispeicher-Adressblock 14 auf dem Speichermedium 4 abgespeichert sind, so können der Adressblock 12 bzw. der Freispeicher-Adressblock 14 vor oder nach dem logisch zusammenhängenden Speicherbereich 6 abgespeichert sein. Der Adressblock 12 umfasst zumindest eine, bevorzugt mehrere Speicheradressen 16. Die Speicheradressen 16 kennzeichnen einen Beginn der entsprechenden komprimierten Datenseite 8. Die Speicheradressen 16 ermöglichen dem Datenbankverwaltungssystem 3 die einzelnen komprimierten Datenseiten 8 zu finden.

Der Freispeicher-Adressblock 14 umfasst zumindest eine Freispeicheradresse 18. Die Freispeicheradresse 18 ermöglicht dem Datenbankverwaltungssystem 3 den freien Speicherblock 10 zu finden. Insbesondere kennzeichnet jeweils eine der Freispeicheradressen 18 einen Beginn des freien Speicherblocks 10 innerhalb des logisch zusammenhängenden Speicherbereichs 6.

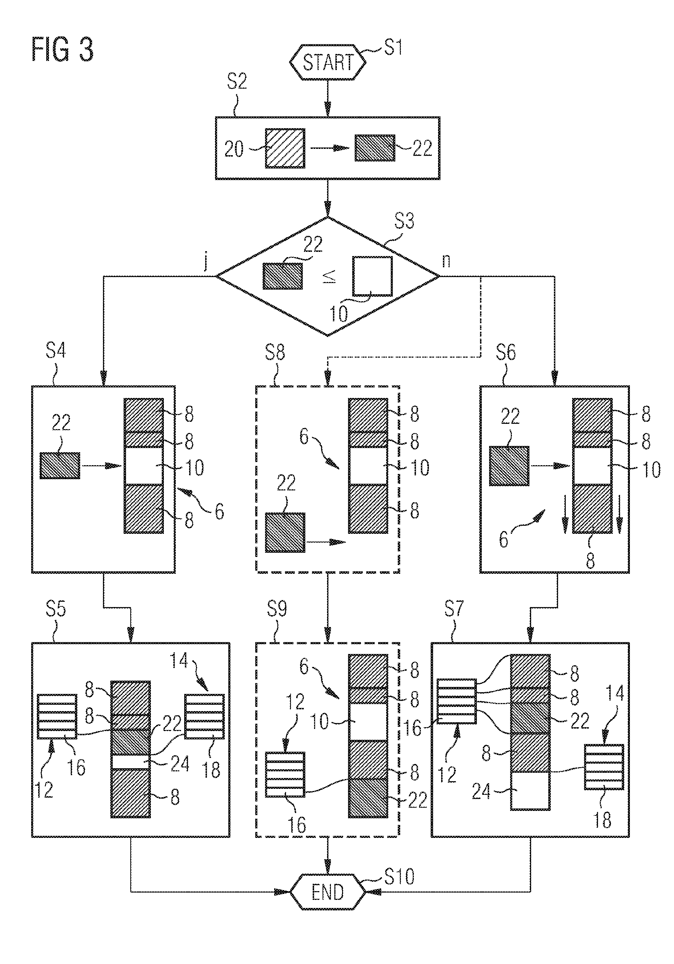

Ein erstes Programm (Figur 3) zum Betreiben des Datenbanksystems 2 ist vorzugsweise auf einer Speichereinheit gespeichert. Die Speichereinheit kann die Datenbank 1, insbesondere das Speichermedium 4 umfassen. Alternativ kann die Speichereinheit einen eigenen Festplattenspeichereinheit und/oder einen eigenen mobilen Datenträger umfassen. Das erste Programm wird vorzugsweise in einem Schritt S1 gestartet, in dem gegebenenfalls Variablen initialisiert werden.

In einem Schritt S2 wird eine neue Datenseite 20 komprimiert. Vorzugsweise weist jede Datenseite, die nicht komprimiert ist, eine gleiche Größe der Datenseite auf. Die komprimierten Datenseiten 8 können unterschiedliche Größen aufweisen. Die Größe der Datenseiten bezieht sich vorzugsweise auf die Menge der Informationen, die auf der Datenseite speicherbar sind. Eine Datei kann beispielsweise eine oder mehrere der Datenseiten umfassen.

In einem Schritt S3 wird überprüft, ob die komprimierte neue Datenseite 22 in den freien Speicherblock 10 passt. In anderen Worten wird überprüft, ob zum Speichern der komprimierten neuen Datenseite 22 weniger Speicherplatz benötigt wird, als freier Speicherplatz in dem freien Speicherblock 10 zur Verfügung steht. Ist die Bedingung des Schritts S3 erfüllt, so wird die Bearbeitung in einem Schritt S4 fortgesetzt. Ist die Bedingung des Schritts S3 nicht erfüllt, so wird die Bearbeitung vorzugsweise in einem Schritt S6 fortgesetzt.

In einem Schritt S4 wird die komprimierte neue Datenseite 22 in dem freien Speicherblock 10 abgespeichert. Vorzugsweise wird die komprimierte neue Datenseite 22 so in dem logisch zusammenhängenden Speicherbereich 6 abgespeichert, dass die Speicheradresse 16 der komprimierten neuen Datenseite 22 der Freispeicheradresse 18 des freien Speicherblocks 10 entspricht.

In einem Schritt S5 wird die Speicheradresse 16, die einen Beginn der abgespeicherten komprimierten neuen Datenseite 22 kennzeichnet, in dem Adressblock 12 abgespeichert. Ferner wird in dem Schritt S5 die Freispeicheradresse 18 des freien Speicherblocks 10 vor dem Speichern der komprimierten neuen Datenseite 22 aus dem Freispeicher-Adressblock 14 gelöscht. Ferner kann in dem Schritt S5 überprüft werden, ob nach dem Speichern der komprimierten neuen Datenseite 22 in dem zuvor freien Speicherblock 10 noch weiterer freier Speicherplatz vorhanden ist. Falls in dem zuvor freien Speicherblock 10 noch weiterer freier Speicherplatz vorhanden ist, wird dieser freie Speicherplatz einem neuen freien Speicherblock 24 zugeordnet. Die entsprechende Freispeicheradresse 18 des neuen freien Speicherblocks 24 wird in dem Freispeicher-Adressblock 14 gespeichert.

In dem Schritt S6 werden zumindest die komprimierten Datenseiten 8, die auf den freien Speicherblock 10 folgen, neu angeordnet, so dass die komprimierte neue Datenseite 22 in den logisch zusammenhängenden Speicherbereich 6 eingefügt werden kann.

In einem Schritt S7 werden zumindest die Speicheradressen 16 der neu angeordneten komprimierten Datenseiten 8 und der komprimierten neuen Datenseite 22 in den Adressblock 12 geschrieben. Ferner wird vorzugsweise der neue freie Speicherblock 24 an den logisch zusammenhängenden Speicherbereich 6 angehängt. Alternativ kann der neue freie Speicherblock 24 auch vor den logisch zusammenhängenden Speicherbereich 6 angefügt werden.

Alternativ zu den Schritten S6 und S7 können auch Schritte S8 und S9 abgearbeitet werden.

In dem Schritt S8 wird die komprimierte neue Datenseite 22 an den logisch zusammenhängenden Speicherbereich 6 angehängt.

In dem Schritt S9 wird die entsprechende Speicheradresse 16, die den Beginn der abgespeicherten komprimierten neuen Datenseite 22 kennzeichnet, in den Adressblock 12 geschrieben.

In einem Schritt S10 kann das erste Programm beendet werden. Vorzugsweise wird das erste Programm jedes mal zum Speichern der neuen Datenseite 20 abgearbeitet.

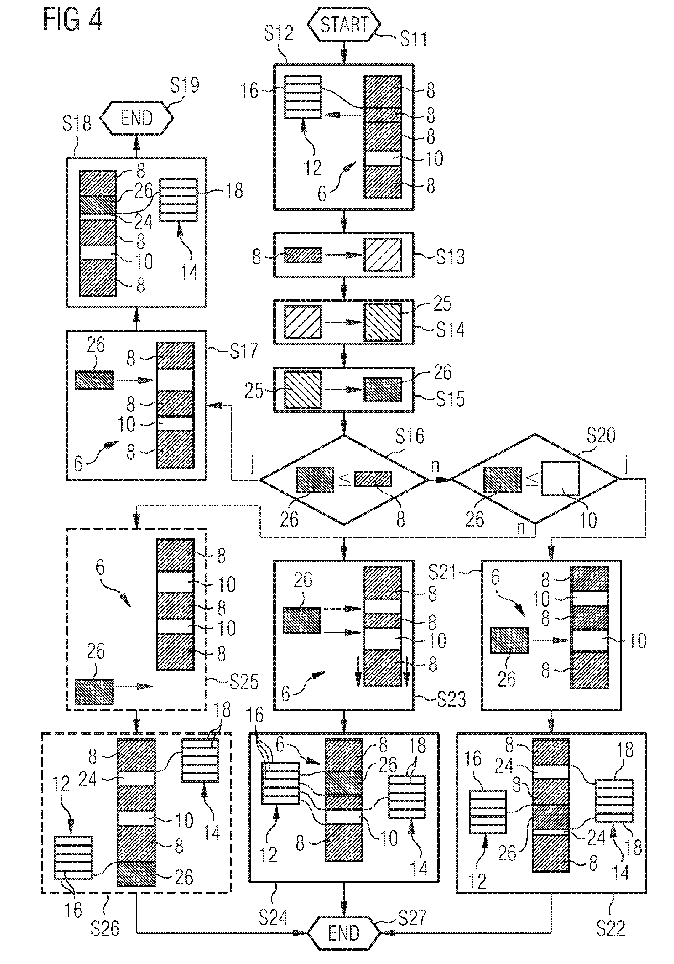

Alternativ oder zusätzlich ist ein zweites Programm (Figur 4) auf der Speichereinheit abgespeichert. Das zweite Programm dient dazu, eine der komprimierten Datenseiten 8, die in dem logisch zusammenhängenden Speicherbereich 6 abgespeichert sind, zu ändern und wieder in den logisch zusammenhängenden Speicherbereich 6 zurück zu schreiben. Das zweite Programm wird vorzugsweise in einem Schritt S11 gestartet, in dem gegebenenfalls Variablen initialisiert werden.

In einem Schritt S12 wird die zu ändernde komprimierte Datenseite 8 anhand der entsprechenden Speicheradresse 16 des Adressblocks 12 in dem logisch zusammenhängenden Speicherbereich 6 gesucht und aus dem logisch zusammenhängenden Speicherbereich 6 gelesen.

In einem Schritt S13 wird die komprimierte Datenseite 8 dekomprimiert.

In einem Schritt S14 wird die Datenseite geändert, die in dem Schritt S13 dekomprimiert wurde.

In einem Schritt S15 wird die geänderte Datenseite 25 komprimiert.

Zum Komprimieren und Dekomprimieren der Datenseiten ist eine Komprimierungsfunktion vorzugsweise in dem Pager PAGER des Datenbankverwaltungssystems 3 implementiert. Dies ist besonders vorteilhaft, da für diese Änderung nur wenige Zeilen Programmcode notwendig sind. Würde man die Kompressionsfunktion in einen Kern des Datenbankverwaltungssystems 3, insbesondere in den SQL-Befehls-Prozessor SQL_CMD_PRO integrieren, so wären dafür aufwendige Änderungen des Datenbankverwaltungssystems 3 nötig.

In einem Schritt S16 wird geprüft, ob die komprimierte geänderte Datenseite 26 kleiner ist als die komprimierte Datenseite 8 vor dem Ändern der Datenseite. Ist die Bedingung des Schritts S16 erfüllt, so wird die Bearbeitung in einem Schritt S17 fortgesetzt. Ist die Bedingung des Schritts S16 nicht erfüllt, so wird die Bearbeitung in einem Schritt S20 fortgesetzt.

In dem Schritt S17 wird die komprimierte geänderte Datenseite 26 in dem logisch zusammenhängenden Speicherbereich 6 abgespeichert. Vorzugsweise wird die komprimierte geänderte Datenseite 26 beginnend an der selben Speicheradresse wie die komprimierte Datenseite 8 vor dem Ändern abgespeichert.

In einem Schritt S18 kann überprüft werden, ob nach dem Abspeichern der komprimierten geänderten Datenseite 26 noch freier Speicherplatz in dem Bereich vorhanden ist, in dem die komprimierte Datenseite 8 vor dem Ändern abgespeichert war. Falls noch freier Speicherplatz zur Verfügung steht, wird dieser vorzugsweise dem neuen freien Speicherblock 24 zugeordnet. Die entsprechende Freispeicheradresse 18 wird in dem Freispeicher-Adressblock 14 abgespeichert.

In einem Schritt S19 kann das zweite Programm beendet werden. Vorzugsweise wird das zweite Programm jedes mal zum Ändern der komprimierten Datenseiten 8 erneut abgearbeitet.

In dem Schritt S20 wird überprüft, ob die komprimierte geänderte Datenseite 26 kleiner ist als der freie Speicherblock 10. Kleiner sein bedeutet in diesem Zusammenhang, dass die komprimierte geänderte Datenseite 26 weniger Speicherplatz benötigt, als freier Speicherplatz in dem freien Speicherblock 10 vorhanden ist. Ist die Bedingung des Schritts S20 erfüllt so wird die Bearbeitung in einem Schritt S21 fortgesetzt. Ist die Bedingung des Schritts S20 nicht erfüllt, so wird die Bearbeitung in einem Schritt S23 fortgesetzt.

In dem Schritt S21 wird die komprimierte geänderte Datenseite 26 in den freien Speicherblock 10 geschrieben. Vorzugsweise wird die komprimierte geänderte Datenseite 26 so in den freien Speicherblock 10 geschrieben, dass die Speicheradresse 16 der komprimierten geänderten Datenseite 26 der Freispeicheradresse 18 des freien Speicherblocks 10 entspricht.

In einem Schritt S22 wird die Speicheradresse der komprimierten geänderten Datenseite 26 in den Adressblock 12 geschrieben. Ferner kann in dem Schritt S22 der ehemalige Speicherplatz der komprimierten Datenseite 8 vor dem Ändern dem neuen freien Speicherblock 24 zugewiesen werden. Daraufhin wird die entsprechende Freispeicheradresse 18 des neuen freien Speicherblocks 24 in den Freispeicher-Adressblock 14 geschrieben. Alternativ oder zusätzlich kann in dem Schritt S22 überprüft werden, ob nach dem Speichern der komprimierten geänderten Datenseite 26 noch freier Speicherplatz in dem ehemals freien Speicherblock 10 vorhanden ist. Falls noch freier Speicherplatz vorhanden ist, so kann dieser freie Speicherplatz dem neuen freien Speicherblock 24 zugeordnet werden, zu dem dann ein entsprechender Eintrag der Freispeicheradresse 18 in den Freispeicher-Adressblock 14 erfolgt.

In dem Schritt S23 werden die abgespeicherten komprimierten Datenseiten 8 und die komprimierte geänderte Datenseite 26 neu angeordnet und abgespeichert. Dazu müssen zumindest die komprimierten Datenseiten 8 verschoben werden, die nach der komprimierten geänderten Datenseite 26 angeordnet sind.

In einem Schritt S24 werden die Speicheradressen 16 der neu angeordneten komprimierten Datenseiten 8 und der komprimierten geänderten Datenseite 26 in dem Adressblock 12 gespeichert. Falls auch der freie Speicherblock 10 verschoben wurde, so wird in dem Freispeicher-Adressblock 14 die Freispeicheradresse 18 gelöscht, die den Beginn des freien Speicherblocks 10 vor der Änderung der komprimierten Datenseite 8 kennzeichnet, und es wird in dem Freispeicher-Adressblock 14 die Freispeicheradresse 18 abgespeichert, die den Beginn des freien Speicherblocks 10 nach dem neuen Anordnen des freien Speicherblocks 10 kennzeichnet.

Alternativ zu den Schritten S23 und S24 können die Schritte S25 und S26 abgearbeitet werden.

In dem Schritt S25 wird die komprimierte geänderte Datenseite 26 an den logisch zusammenhängenden Speicherbereich 6 angehängt.

In dem Schritt S26 wird der Beginn der komprimierten geänderten Datenseite 26 innerhalb des logisch zusammenhängenden Speicherbereichs 6 durch die entsprechende Speicheradresse 16 des Adressblocks 12 gekennzeichnet. Zusätzlich kann die Speicheradresse 16, die den Beginn der komprimierten Datenseite 8 vor dem Ändern kennzeichnet, aus dem Adressblock 12 gelöscht werden und als Freispeicheradresse 18 in den Freispeicher-Adressblock 14 geschrieben werden.

Die Erfindung ist nicht auf die angegebenen Ausführungsbeispiele beschränkt. Beispielsweise kann das Datenbankverwaltungssystem 3 und/oder die Datenbank 1 weitere Komponenten umfassen. Ferner können das erste und das zweite Programm in ein Programm implementiert sein oder in Unterprogramme aufgeteilt sein. Ferner können in dem Schritt S5 des ersten Programms und in den Schritten S22 und S18 des zweiten Programms überprüft werden, ob neuer freier Speicherplatz zur Verfügung steht oder nicht.

## Patentansprüche

1. Datenbanksystem (2) mit
- einem Speichermedium (4), das zumindest einen logisch zusammenhängenden Speicherbereich (6) aufweist,
- mehreren komprimierten Datenseiten (8), die in dem logisch zusammenhängenden Speicherbereich (6) abgespeichert sind,
- zumindest einem freien Speicherblock (10) innerhalb des logisch zusammenhängenden Speicherbereichs (6) zum Abspeichern zumindest einer komprimierten neuen Datenseite (22),
- einem Adressblock (12), der außerhalb des logisch zusammenhängenden Speicherbereichs (6) abgespeichert ist und der Speicheradressen (16) umfasst, die jeweils einen Beginn einer der komprimierten Datenseiten (8) kennzeichnen,
- einem Freispeicher-Adressblock (14), der außerhalb des logisch zusammenhängenden Speicherbereichs (6) abgespeichert ist und der zumindest eine Freispeicheradresse (18) umfasst, die einen Beginn des freien Speicherblockes (10) kennzeichnet.

2. Datenbanksystem (2) nach Anspruch 1, das einen Pager (PAGER) umfasst, der dazu ausgebildet ist, eine Datenseite des Datenbanksystems (2) zu komprimieren.

3. Verfahren zum Betreiben des Datenbanksystems (2) gemäß einem der Ansprüche 1 oder 2, bei dem zum Speichern einer neuen Datenseite (20) die neue Datenseite (20) von dem Datenbanksystem (2) komprimiert wird und bei dem überprüft wird, ob die komprimierte neue Datenseite (22) in den freien Speicherblock (10) des logisch zusammenhängenden Speicherbereichs (6) des Speichermediums (4) passt, und bei dem, falls die komprimierte neue Datenseite (22) in den freien Speicherblock (10) des logisch zusammenhängenden Speicherbereichs (6) des Speichermediums (4) passt,
- die komprimierte neue Datenseite (22) in dem freien Speicherblock (10) der Datenbank (2) abgespeichert wird,
- die entsprechende Freispeicheradresse (18) des freien Speicherblocks (10) aus dem Freispeicher-Adressblock (14) gelöscht wird,
- die entsprechende Speicheradresse (16) der gespeicherten komprimierten neuen Datenseite (22) in dem Adressblock (12) abgespeichert wird.

4. Verfahren nach Anspruch 3, bei dem, falls die komprimierte neue Datenseite (22) nicht in den freien Speicherblock (10) passt, die komprimierte neue Datenseite (22) an die letzte komprimierte Datenseite (8) des logisch zusammenhängenden Speicherbereichs (6) angehängt wird und bei dem in dem Adressblock (12) die entsprechende Speicheradresse (16) der abgespeicherten komprimierten neuen Datenseite (22) abgespeichert wird.

5. Verfahren nach Anspruch 3, bei dem, falls die komprimierte neue Datenseite (22) nicht in den freien Speicherblock (10) passt, die bereits abgespeicherten komprimierten Datenseiten (8) des logisch zusammenhängenden Speicherbereichs (6) neu angeordnet werden und bei dem die komprimierte neue Datenseite (22) zwischen die bereits abgespeicherten komprimierten Datenseiten (8) des logisch zusammenhängenden Speicherbereichs (6) eingegliedert wird und bei dem die entsprechenden neuen Speicheradressen (16) der neu angeordneten komprimierten Datenseiten (8) und der komprimierten neuen Datenseite (22) in dem Adressblock (12) abgespeichert werden.

6. Verfahren nach einem der Ansprüche 3 bis 5, bei dem
- die komprimierte neue Datenseite (22) in dem freien Speicherblock (10) gespeichert wird,
- überprüft wird, ob der vor dem Speichern der komprimierten neuen Datenseite (22) freie Speicherblock (10) nach dem Speichern der komprimierten neuen Datenseite (22) noch weiteren freien Speicherplatz aufweist,
- falls nach dem Speichern der komprimierten neuen Datenseite (22) der vor dem Speichern der komprimierten neuen Datenseite (22) freie Speicherblock (10) noch weiteren freien Speicherplatz aufweist, ein Beginn des weiteren freien Speicherplatzes einem Beginn eines neuen freien Speicherblocks (24) zugeordnet wird,
- eine neue Freispeicheradresse (18), die den Beginn des neuen freien Speicherblocks (24) kennzeichnet, in dem Freispeicher-Adressblock (18) abgespeichert wird.

7. Verfahren nach einem der Ansprüche 3 bis 6, bei dem zum Ändern einer der Datenseiten der Datenbank (2)
- die Speicheradresse (16) der entsprechenden komprimierten Datenseite (8) aus dem Adressblock (12) gelesen wird,
- die entsprechende komprimierte Datenseite (8) von dem Datenbanksystem (2) dekomprimiert wird,
- die entsprechende Datenseite geändert wird,
- die geänderte Datenseite (25) komprimiert wird,
- überprüft wird, wie viel Speicherplatz die komprimierte geänderte Datenseite (26) benötigt,
- die komprimierte geänderte Datenseite (26) beginnen mit derselben Speicheradresse (16) abgespeichert wird wie die entsprechende komprimierte Datenseite (8) vor der Änderung, falls die komprimierte geänderte Datenseite (26) gleich viel wie oder weniger Speicherplatz als die entsprechende komprimierte Datenseite (8) vor der Änderung benötigt,
- die komprimierte geänderte Datenseite (26) in dem freien Speicherblock (10) gespeichert wird, die entsprechende Freispeicheradresse (18) des vor dem Speichern der komprimierten geänderten Datenseite (26) freien Speicherblocks (10) aus dem Freispeicher-Adressblock (14) gelöscht wird und die entsprechende Freispeicheradresse (18) als Speicheradresse (16) in dem Adressblock (12) gespeichert wird, falls die komprimierte geänderte Datenseite (26) mehr Speicherplatz benötigt als die entsprechende komprimierte Datenseite (8) vor der Änderung und falls die komprimierte geänderte Datenseite (26) gleich viel oder weniger Speicherplatz benötigt, als der freie Speicherblock (10) umfasst.

8. Verfahren nach Anspruch 7, bei dem, falls die komprimierte geänderte Datenseite (24) weniger Speicherplatz als die entsprechende komprimierte Datenseite (8) vor der Änderung benötigt, in den Freispeicher-Adressblock (14) eine neue Freispeicheradresse (18) abgespeichert wird, die einen Beginn des neuen freien Speicherblocks (24) kennzeichnet, der an die komprimierte geänderte Datenseite (8) anschließt.

9. Verfahren nach Anspruch 7 oder 8, bei dem, falls die komprimierte geänderte Datenseite (26) mehr Speicherplatz als die entsprechende komprimierte Datenseite (8) vor der Änderung benötigt und falls die komprimierte geänderte Datenseite (26) mehr Speicherplatz benötigt, als der freie Speicherblock (10) umfasst,
- die komprimierte geänderte Datenseite (26) an die letzte komprimierte Datenseite (8) des logisch zusammenhängenden Speicherbereichs (6) angehängt wird,
- eine neue Speicheradresse (16) in dem Adressblock (12) gespeichert wird, die einen Beginn der komprimierten geänderten Datenseite (26) kennzeichnet,
- die Speicheradresse (16), die den Beginn der entsprechenden komprimierten Datenseite (8) vor der Änderung kennzeichnet, als neue Freispeicheradresse (18) in dem Freispeicher-Adressblock (14) gespeichert wird.

10. Verfahren nach Anspruch 7 oder 8, bei dem, falls die komprimierte geänderte Datenseite (26) mehr Speicherplatz als die entsprechende komprimierte Datenseite (8) vor der Änderung benötigt und falls die komprimierte geänderte Datenseite (26) mehr Speicherplatz benötigt, als der freie Speicherblock (10) umfasst,
- die bereits abgespeicherten komprimierten Datenseiten (8) des logisch zusammenhängenden Speicherbereichs (6) neu angeordnet werden,
- die komprimierte neue Datenseite (22) in die bereits abgespeicherten komprimierten Datenseiten (8) des logisch zusammenhängenden Speicherbereichs (6) eingegliedert und abgespeichert wird,
- die entsprechenden neuen Speicheradressen (16) der neu angeordneten komprimierten Datenseiten (8) und der komprimierten neuen Datenseite (22) in dem Adressblock (12) abgespeichert werden.

11. Verfahren nach einem der Ansprüche 7 bis 10, bei dem, falls die geänderte komprimierte Datenseite (26) mehr Speicherplatz benötigt als die entsprechende komprimierte Datenseite (8) vor der Änderung und falls die geänderte komprimierte Datenseite (26) weniger Speicherplatz benötigt als der freie Speicherblock (10) umfasst, in dem Freispeicher-Adressblock (14) die Freispeicheradresse (18) abgespeichert wird, die den Beginn des neuen freien Speicherblocks (24) kennzeichnet, der an die geänderte komprimierte Datenseite (26) anschließt.

12. Computerprogrammprodukt, das eine computerlesbare Speichereinheit mit Programmanweisungen umfasst, die durch einen Computer ausführbar sind und die ausgebildet sind zum Durchführen des Verfahrens nach einem der Ansprüche 3 bis 11.
